# FASCICULE DE BREVET EUROPEEN

(11) **EP 4 602 193 B1**
(45) Date de publication et mention de la délivrance du brevet: **07.10.2026**
(21) Numéro de dépôt: 23782927.0
(22) Date de dépôt: 29.09.2023
(51) Int. Cl.: C23F 3/06, B22F 10/62, B22F 10/28, B33Y 40/20

(54) **BAIN DE POLISSAGE CHIMIQUE POUR TITANE ET ALLIAGES DE TITANE, ET PROCÉDÉ UTILISANT UN TEL BAIN**
CHEMISCHES POLIERBAD FÜR TITAN UND TITANLEGIERUNGEN, UND VERFAHREN UNTER VERWENDUNG EINES SOLCHEN BADES
CHEMICAL POLISHING BATH FOR TITANIUM AND TITANIUM ALLOYS, AND METHOD USING SUCH A BATH

(30) Priorité: 14.10.2022 FR 2210635
(43) Date de publication de la demande: 20.08.2025
(73) Titulaire: Institut de Recherche Technologique Matériaux, Métallurgie, Procédés, 57070 Metz (FR)
(72) Inventeur: FRAYRET, Jérôme, 34270 Le Triadou (FR); TARDELLI, Joffrey, 57310 Bertrange (FR)
(74) Mandataire: Office Freylinger
(86) Numéro de dépôt international: PCT/EP2023/077153
(87) Numéro de publication internationale: WO 2024/078899

(56) Documents cités:
- CN-A- 105 297 026
- FR-A- 1 589 844
- JP-B1- S 508 689

## Description

### Domaine technique

La présente invention concerne généralement le domaine du traitement de surface de pièces en titane ou en alliage de titane, et notamment le domaine du polissage de pièces en titane ou en alliage de titane. L'invention est particulièrement destinée au polissage des pièces réalisées par fabrication additive.

### Etat de la technique

La fabrication additive ou impression 3D constitue un axe majeur de la R&D en France et dans le monde permettant de produire des pièces polymères ou métalliques tridimensionnelles à partir de poudres. De par le mode d'élaboration par fusions successives de poudres, les procédés de fabrication additive permettent de produire des pièces de géométries complexes mais également d'envisager la production de nouvelles nuances d'alliages non accessibles par métallurgie traditionnelle tout en limitant les quantités de matière première nécessaires. La fabrication additive est une technologie particulièrement intéressante pour les industries aérospatiales, automobiles ou navales dans l'optique d'améliorer la performance et l'allégement des structures. Cependant, les procédés de fabrication additive dits sur lit de poudre conduisent intrinsèquement à la création de pièces dont l'état de surface final présente les stigmates d'une élaboration à partir de poudres avec, en particulier, des rugosités de surface (exprimée par le paramètre Ra) comprises entre 5 et 25 µm selon les procédés, soit sensiblement supérieure à la rugosité d'une pièce usinée (de l'ordre de quelques microns). D'autre part, les pièces produites sont généralement caractérisées par la présence de particules partiellement fondues en extrême surface pouvant présenter un risque de détachement en service et dégrader ainsi les performances de ces pièces (obturation de canalisations, entrainement de particules dans les systèmes hydrauliques, diminution des propriétés mécaniques statiques et dynamiques,...).

Il est donc nécessaire de diminuer la rugosité des pièces issues de fabrication additive, mais également d'éliminer les irrégularités de surface et prévenir ainsi le risque de décollement de particules/corps étrangers de la surface en service, qui pourrait générer des problèmes fonctionnels en lien avec l'utilisation de ces pièces. L'amélioration de l'état de surface des pièces produites pourra également permettre d'améliorer certaines performances en termes de résistance à la fatigue et à la corrosion, ou encore d'écoulement sur les surfaces pour les applications hydrauliques.

Aujourd'hui, une telle étape de post-traitement représente un verrou technologique majeur pour le développement de pièces métalliques fonctionnelles issues de fabrication additive à caractéristiques maîtrisées et reproductibles.

Différents procédés de polissage existent tels que l'électropolissage ou le polissage plasma ou laser mais ces procédés nécessitent l'utilisation de courant voire de lasers avec un coût induit élevé. De plus l'utilisation de laser ou le travail avec des intensités électriques élevées nécessitent une protection particulière des opérateurs. Enfin ces procédés complexes ont besoin d'une maîtrise fine de leurs paramètres. Concernant les bains d'électropolissage, ils sont aussi difficiles à gérer car ils sont très hygroscopiques et des étapes de déshydratation sont nécessaires périodiquement.

Les procédés de polissage dits chimiques consistant à immerger la pièce à traiter dans un bain, appelé bain de polissage chimique, contenant des composés acides ou basiques ainsi que des agents oxydants, sans application d'un courant électrique ou d'un laser, sont plus simples à mettre en œuvre.

Un exemple d'un procédé de polissage chimique est décrit par exemple dans le document CN 105 297 026 A, qui divulgue l'utilisation d'un bain comprenant au moins une huile végétale, deux agents oxydants sous forme d'acide nitrique et de peroxyde d'hydrogène, et un agent complexant sous forme d'acide fluorhydrique. Outre sa complexité, ce bain présente l'inconvénient d'utiliser des oxydants et complexant forts du titane, qui attaquent rapidement la surface d'une pièce en titane à polir, et la frontière entre polissage et usinage lors de l'utilisation d'un tel bain est faible. De plus, il nécessite de manipuler de l'acide fluorhydrique, qui est extrêmement corrosif et toxique, et la mise en place d'un tel bain de polissage nécessite donc la mise en place de mesures de protections particulières des opérateurs.

Un procédé de polissage chimique pour le polissage d'une pièce en titane ou en alliage de titane est décrit dans chacun des documents FR 1589844 A et JP S50 8689 B1.

L'objectif de l'invention est de fournir un bain de polissage pour pièces en titane ou en alliage de titane, qui ne présente pas les inconvénients mentionnés ci-dessus et qui permette d'obtenir une surface présentant une rugosité moyenne (exprimée par le paramètre Sa) typiquement inférieure à 4 ou 5 µm et un enlèvement de matière limité, typiquement moins de 300 à 350 µm.

### Description générale de l'invention

Avec cet objectif en tête, la présente invention concerne un bain de polissage chimique pour pièces en titane et alliages de titane, et un procédé utilisant un tel bain.

Le polissage chimique a pour objectif de réduire la rugosité de surface d'une pièce métallique, par le biais d'une opération de dissolution sélective d'une couche de matière d'épaisseur variable, pouvant aller de la dizaine de nanomètre à plusieurs dizaines de micromètres. Cet enlèvement de matière se fait par voie chimique, en employant des réactifs qui peuvent être de nature acides ou basiques, mais également posséder des propriétés oxydantes. Il est à noter que la dissolution provoquée par le procédé de polissage chimique a un impact direct sur l'aspect dimensionnel de la pièce même si cela n'est pas l'objectif recherché, ce qui le différencie du procédé d'usinage chimique dont le seul objectif est de réduire les côtes de la pièce (plusieurs dizaines ou centaines de microns), de sorte d'atteindre une valeur cible.

Le principe du polissage chimique est aussi différent de celui du décapage chimique, qui s'apparente davantage au procédé d'usinage chimique. En effet, le décapage chimique a pour objectif l'élimination d'une couche d'oxyde, dont l'épaisseur est de l'ordre de quelques microns, sans impacter les caractéristiques dimensionnelles de la pièce et sa rugosité de surface mais permettant de favoriser l'accroche du traitement de surface appliqué ultérieurement.

Une différence peut également être notée par rapport aux étapes de dégraissage/décontamination chimique, dont le but est de solubiliser des espèces chimiques adsorbées en surface du matériau à traiter. Aucun impact sur les caractéristiques dimensionnelles de la pièce n'est observé dans ce dernier cas.

Ainsi, dans le présent texte, on entend par polissage le fait de diminuer la rugosité de surface d'une pièce, en modifiant le moins possible ses dimensions.

Conformément à l'invention, un bain de polissage chimique pour le polissage d'une pièce en titane ou en alliage de titane, ou d'une partie de celle-ci, comprend :
- de l'eau ;
- un agent complexant fluorure apte à former un complexe avec le titane oxydé, à une concentration équivalente en fluorure comprise entre 1,40 et 2,80 mol/L ;
- de l'acide phosphorique à une concentration entre 3,0 et 6,0 mol/L (soit entre 290 et 590 g/L) ; et
- de l'acide sulfurique à une concentration entre 0,5 et 1,5 mol/L (soit entre 50 et 150 g/L).

Le présent bain de polissage chimique se présente donc sous la forme d'une solution aqueuse ayant une concentration en acides élevée. Ainsi, le pH d'un bain selon l'invention est inférieur à 2,0, de manière préférée inférieur à 1,0, de manière particulièrement préférée un bain selon l'invention présente un pH négatif. Avantageusement, les concentrations en acide phosphorique et en acide sulfurique sont telles que le pH d'un bain selon l'invention est négatif et reste négatif au cours de l'utilisation du bain malgré une consommation des acides lors du polissage de pièces en titane ou en alliage de titane.

Un des mérites de l'invention est d'avoir identifié des composés, et leurs concentrations respectives, qui permettent un abattement significatif de la rugosité, sans augmenter significativement la décote, alors que ces deux effets nécessitent en général des paramètres antagonistes.

La solution selon l'invention comprend deux acides et un agent complexant de l'oxyde le titane. La densité du bain est contrôlée par le mélange d'acide sulfurique et d'acide phosphorique. En effet, afin d'obtenir un effet de polissage, le présent bain présente une viscosité, ou densité, généralement plus importante que celle d'autres solutions d'attaque chimique, par ex. du type usinage chimique. Ainsi, l'agressivité de la présente solution est différente des solutions de décapage ou d'usinage chimique conventionnelles, et ce malgré l'utilisation de réactifs qui peuvent être similaires.

L'acide sulfurique, tout comme l'acide phosphorique, possède des propriétés oxydantes, bien que ces acides ne soient généralement pas considérés comme des agents oxydants, au contraire par exemple de l'acide nitrique. Les propriétés oxydantes des acides sulfurique et phosphorique sont cependant suffisantes pour oxyder la surface d'une pièce en titane ou en alliage de titane. En effet, le titane est un métal très sensible à l'oxydation. Ainsi, et de manière avantageuse, selon des modes de réalisations préférés, aucun agent oxydant autre que l'acide sulfurique et l'acide phosphorique n'est ajouté au bain de polissage selon l'invention.

La viscosité plus importante de la solution de polissage permet de ralentir les phénomènes de diffusion des espèces chimiques de la solution vers la surface de la pièce où ceux-ci ont été consommés. L'objectif est de rendre la diffusion plus lente que la cinétique de réaction. La surface s'appauvrit ainsi en agents d'attaque (acide sulfurique ou acide phosphorique) et en complexants, car ils ont été consommés plus vite qu'ils n'arrivent à la surface. Leur arrivée a donc lieu en premier près des sommets des reliefs des surfaces à polir où leur action sera prioritaire. Alors que les creux ne verront pas autant de réactifs (agents d'attaque et agents complexants), ceux-ci ayant déjà été consommés par une réaction sur les points les plus en relief de la pièce. Ce phénomène est ainsi responsable d'un effet de polissage de la surface par dissolution sélective des aspérités de surface.

Dans le cadre de l'invention, parler d'une augmentation de la viscosité du bain est équivalent à parler d'une augmentation de sa densité, et inversement.

Selon la compréhension actuelle de l'invention, l'efficacité du présent bain de polissage chimique repose sur la maitrise des cinétiques de diffusion des acides sulfurique et phosphorique et des agents complexants au sein du bain vers la surface de la pièce à polir, ainsi que des cinétiques de réaction des acides avec la surface de la pièce à polir. Le principe d'action du bain de polissage chimique selon l'invention est le suivant. Une viscosité appropriée (accrue par rapport aux bains classiques d'attaque chimique) du bain de polissage chimique permet de ralentir les phénomènes de diffusion des espèces chimiques actives (ici les acides - sulfurique et phosphorique - et les agents complexants) de la solution vers la surface de la pièce. Au voisinage de la surface, les espèces actives sont consommées, ce qui induit un appauvrissement local du bain. Afin de rétablir l'équilibre des concentrations, les espèces actives diffusent depuis le bain vers la surface, et ce faisant elles réagissent dès qu'elles entrent en contact avec la surface à polir. Les zones les plus accessibles étant les sommets des pics à l'origine de la rugosité de surface, l'attaque des sommets est favorisée, ce qui permet une réduction du relief de la surface et donc de la rugosité globale de la pièce.

Des premiers essais ont été réalisés avec le présent bain de polissage, pour des volumes de bain entre 100 mL et 600 L, et ont prouvé son efficacité. Le bain de polissage chimique selon l'invention a été particulièrement développé pour le polissage de pièces issues des techniques de fabrication additive, mais peut être appliqué à toutes sortes de pièces en titane ou alliage de titane, quel que soit le procédé d'obtention. En outre, les dimensions et/ou géométries peuvent être très variées. Par ailleurs, la pièce en titane à traiter peut être une partie d'un composant. C'est-à-dire que la partie de titane à traiter peut être combinée à un autre matériau, auquel elle est juxtaposée ou superposée.

Les agents complexants fluorure privilégiés se présentent sous la forme d'un sel fluoré. En d'autres termes, l'acide fluorhydrique en tant que tel n'est pas employé comme source de fluorure. Il n'est cependant pas exclu de la présente invention que de l'acide fluorhydrique se forme dans le bain suite à la dissolution de ces sels. L'acide fluorhydrique a une agressivité forte vis-à-vis du titane alors que l'ajout d'un sel fluoré a uniquement un rôle de complexation. De plus l'utilisation d'un sel fluoré permet de diminuer la dangerosité de montage de la solution. En d'autres termes, l'agent complexant fluorure est avantageusement ajouté à la solution sous forme de sel, et non pas sous forme d'acide fluorhydrique pur, car les sels sont moins dangereux à manipuler.

De manière avantageuse, l'agent complexant fluorure ajouté au bain de polissage chimique est choisi parmi NH₄F, NH₄F.HF, NaF, NaF.HF, KF, KF.HF, H₂TiF₆, H₂SiF₆ ou leurs mélanges. Le rôle du complexant fluorure dans l'invention est de venir se combiner au titane oxydé (sous forme d'oxyde de titane hydraté, en particulier sous forme de TiO₂, TiO(OH)₂ et/ou Ti(OH)₄) qui se forme en surface de la pièce en présence des acides sulfurique et phosphorique, ou qui peut être en solution.

Les agents complexants fluorure privilégiés se présentent sous la forme d'un sel fluoré et d'acide fluorhydrique. En d'autres termes, il s'agit d'un acide faible en présence de son anion, l'ion fluorure ou F⁻. Ainsi, l'agent complexant utilisé a également une fonction de tampon, ce qui rend possible le contrôle du pH du bain de polissage chimique.

De plus, les ions fluorures (ou F⁻) sont capables de complexer une variété de métaux, ce qui est intéressant dans le cas de pièces en alliage de titane. Par ailleurs, les fluorures sont des agents complexants extrêmement stables en solution, et le risque qu'ils soient dégradés au cours du temps et forment des sous-produits mal maîtrisés est minime.

Selon les variantes, l'agent complexant fluorure est présent de telle manière que la concentration en fluorure soit comprise entre 1,74 et 2,46 mol/L, de préférence entre 1,80 et 2,20 mol/L.

Selon les variantes, l'acide phosphorique est présent à une concentration entre 4,0 et 5,5 mol/L, soit entre 390 et 540 g/L, de manière préférée entre 4,5 et 5,0 mol/L, soit entre 440 et 490 g/L.

Selon les variantes, l'acide sulfurique à une concentration entre 0,50 et 1,25 mol/L, soit entre 50 et 125 g/L, de préférence à une concentration entre 0,80 et 1,02 mol/L, soit entre 80 et 100 g/L..

Au cours de son utilisation, le bain de polissage se charge en titane dissous, du fait de l'attaque chimique ayant lieu sur les rugosités de surface. Il est possible de régénérer un tel bain après utilisation par simple ajout des composés consommés au cours du polissage (i.e. les acides et les agents complexants), et dans ce cas le bain régénéré contient toujours du titane, ce qui est aussi le cas des bains de polissage chimique traditionnels. Cependant les bains traditionnels sont détruits lorsque la concentration en titane devient trop élevée. La présence du titane peut en effet perturber le fonctionnement du bain, et nuire aux performances de polissage, ce qui se traduit notamment par le ralentissement de la cinétique de réaction qui pourrait pénaliser le principe du polissage et la compétition avec la diffusion des réactifs (acide sulfurique, acide phosphorique et agents complexants). Il est donc préférable de définir les concentrations limites admissibles en titane ne venant pas dégrader le mécanisme chimique du polissage. De manière avantageuse, le titane est présent à une concentration allant d'environ 2 à 35 g/L, soit d'environ 0,04 à 0,73 mol/L, de préférence à une concentration allant d'environ 10 à 30 g/L, soit d'environ 0,20 à 0,63 mol/L.

L'accumulation de titane dissout dans le bain au cours de l'utilisation du présent bain de polissage chimique se fait selon un gradient de concentration depuis la surface de la pièce à polir vers le volume du bain. La concentration plus élevée en titane à proximité de la surface de la pièce à polir permet avantageusement également une augmentation de la viscosité dans cette zone. Ainsi, la viscosité du bain augmente à l'approche de la surface de la pièce, et favorise une attaque des sommets de la rugosité de surface (i.e. l'attaque des vallées est ralentie par rapport à l'attaque des sommets). Ce phénomène participe à l'effet de polissage de la surface de la pièce en titane ou en alliage de titane par dissolution sélective des aspérités de surface et minimise la décote.

Selon les variantes, le bain présente une densité allant de 1,2 à 1,4 g/cm³.

Selon les variantes, le bain est essentiellement exempt de particules abrasives, en particulier le bain est essentiellement exempt de particules d'oxyde métallique, notamment de particules de silice SiO₂. Dans le présent texte, « essentiellement exempt » signifie qu'aucune particule abrasive n'est ajoutée au bain selon l'invention. Les fortes concentrations en acides (acide sulfurique et acide phosphorique) ainsi que la présence de fluorures empêchent la formation de particules d'oxydes, notamment de particules d'oxyde de titane TiO₂. Cependant, des bains dans lesquels des particules se formeraient ou des fluorures précipiteraient, par exemple des bains dans lesquels il y aurait formation de précipités de fluorure de titane TiF₄, au cours de l'utilisation du bain dans un procédé de polissage chimique, constituent également des bains selon l'invention. Ainsi, un bain de polissage chimique selon l'invention peut contenir des précipités de fluorures métalliques et être essentiellement exempt de particules abrasives au sens de l'invention.

Selon des variantes, on n'ajoute pas d'huile, en particulier ni huile minérale ni huile végétale, au présent bain de polissage chimique (le bain est donc typiquement exempt de ces composés). Avantageusement, la viscosité élevée de la solution est due uniquement à la présence dans le bain d'acide sulfurique, d'acide phosphorique et de titane.

Selon un mode de réalisation particulièrement préféré, le présent bain de polissage est aqueux et est essentiellement constitué des acides sulfurique et phosphorique, du titane et de l'agent complexant fluorure. En d'autres termes, le présent bain comprend moins de 10% molaire, de préférence moins de 5% molaire, de manière particulièrement préférée moins de 2% molaire, de composés qui ne sont pas choisis parmi l'eau, l'acide sulfurique, l'acide phosphorique, l'agent complexant fluorure (en particulier les sels fluorés), le titane (en particulier les sels de titane, notamment H₂TiF₆) ou leurs mélanges.

Dans le contexte de l'invention, les plages de concentrations mentionnées doivent être comprises au sens le plus large possible, i.e. en incluant les valeurs limites supérieure et inférieure desdites plages de concentrations. Tel qu'utilisé dans le présent texte, le terme « environ » signifie une plage de valeurs comprises entre ±10% de la valeur indiquée.

Dans un autre aspect, l'invention propose un procédé de polissage chimique d'une pièce en titane ou en alliage de titane, ou d'une partie de celle-ci en utilisant le bain de polissage chimique tel que décrit ci-dessus.

Le procédé selon l'invention comprend au moins les étapes suivantes :
- fournir un bain de polissage chimique tel que décrit ci-dessus ;
- immerger une pièce à polir en titane ou en alliage de titane, ou une partie de celle-ci, dans le bain de polissage chimique ;
- retirer la pièce du bain après une durée d'immersion prédéterminée.

Afin de maîtriser les concentrations en réactifs, notamment en acides - sulfurique et/ou phosphorique - et en agent complexant dans le bain de polissage, ces concentrations peuvent être déterminées par dosage. Le dosage des différentes espèces chimiques peut être effectué par un titrage acido-basique en milieu non aqueux, par thermo-titration ou par spectrophotométrie. Alternativement, il est également possible d'effectuer un dosage des différents réactifs par chromatographie ionique ou par spectrométrie d'émission atomique à plasma à couplage inductif (ICP-AES).

La température du bain de polissage lors de l'immersion de la pièce à polir est comprise entre 30°C et 60°C, de préférence entre 40°C et 50°C. La durée d'immersion de la pièce en titane ou en alliage de titane dans le bain de polissage est comprise entre 20 et 60 minutes, de préférence comprise entre 30 et 50 minutes. La température du bain a une influence sur la cinétique de réaction du procédé de polissage, et notamment sur la vitesse d'attaque du titane. Plus la température est élevée et plus les agents d'attaque (en particulier l'acide sulfurique et/ou l'acide phosphorique) et complexants agissent rapidement. La différence existant entre la vitesse de réaction des réactifs et leur diffusion est accentuée, ce qui améliore le procédé de polissage et les résultats obtenus, i.e. une diminution de la rugosité de surface tout en limitant la décote.

Grâce au procédé selon l'invention utilisant le bain de polissage à une certaine température et en immergeant la pièce ou la partie de celle-ci à polir durant un temps particulier, il est possible d'obtenir un abattement significatif de la rugosité de surface de la pièce sans fortement augmenter la décote. Ces deux effets nécessitent en général des paramètres antagonistes : immerger une pièce en titane ou en alliage de titane plus longtemps dans le bain de polissage permet de favoriser la diminution de la rugosité mais augmente la décote. De manière surprenante, appliquer une durée d'immersion de 20 minutes est suffisante pour obtenir d'obtenir une rugosité, ou hauteur, moyenne arithmétique sur une surface (Sa) résiduelle inférieure à 5 µm, et même inférieure à 3 ou 2 µm, tout en limitant la décote à une centaine de micromètres. En d'autres termes, dans le présent contexte, la décote observée pour une pièce polie à l'aide d'un bain de polissage chimique ou un procédé de polissage chimique selon l'invention présente une décote inférieure à 300 à 350 µm. Le paramètre Sa peut être considéré comme plus pertinent que Ra lorsqu'il s'agit de quantifier la rugosité, ou une diminution de rugosité, d'une surface car il s'agit d'une rugosité moyenne arithmétique mesurée sur une surface et non plus uniquement le long d'une ligne comme Ra.

De plus, les pièces en titane ou en alliage de titane polies à l'aide d'un bain de polissage chimique selon l'invention, présentent également de manière avantageuse une rugosité, ou hauteur, maximale sur une surface (Sz) résiduelle inférieure à 50 µm, et même inférieure à 40 µm.

De manière avantageuse, une étape de dégraissage et/ou décapage chimique peut être réalisée sur la surface de la pièce à polir avant l'étape d'immersion de ladite pièce ou de la partie de celle-ci à polir, dans le bain de polissage chimique. De manière particulièrement avantageuse, le bain de polissage chimique est suffisamment agressif pour éliminer tout oxyde résiduel formé à la surface de la pièce à polir, et une étape de dégraissage suffit avant de pouvoir traiter la pièce à polir avec le procédé selon l'invention. Une telle étape de préparation de la surface permet de nettoyer celle-ci, en particulier afin d'éliminer des corps gras déposés à la surface de la pièce à traiter lors de la manipulation de celle-ci, et notamment de faciliter l'accès de celle-ci aux acides (permettant, entre autres, une oxydation de la surface) et/ou agents complexants réagissant avec ladite surface lors du processus de polissage chimique, augmentant son efficacité.

Le bain de polissage chimique selon l'invention ou le procédé utilisant un tel bain, sont particulièrement bien adaptés aux alliages de titane.

Le présent bain de polissage chimique ainsi que le présent procédé de polissage ont été notamment développés pour le traitement de pièces en alliage de titane de forme allotropique alpha, beta ou biphasé alpha-beta ou en alliage de titane de type alpha, alpha proche, beta, beta proche ou biphasé alpha-beta, en particulier les alliages de titane peuvent être les alliages TA6V, T40, TV10A3Fe2, Ti6242, β21, β21S, Ti 555-3, plus particulièrement l'alliage de titane est l'alliage TA6V ou l'alliage T40, couramment utilisés dans l'industrie et en fabrication additive.

De manière avantageuse, la pièce à polir en totalité ou en partie à l'aide d'un bain de polissage chimique selon l'invention ou du procédé utilisant un tel bain est une pièce en titane ou en alliage de titane obtenue par un procédé de fabrication additive, ou impression tridimensionnelle.

Ainsi, le présent bain de polissage chimique ou le présent procédé de polissage chimique trouve particulièrement application pour le traitement de pièces produites pour l'industrie aérospatiale, aéronautique, et automobile, pour éliminer les irrégularités de surface et prévenir ainsi le risque de décollement de particules de la surface desdites pièces en service, qui pourrait générer des problèmes fonctionnels en lien avec leur utilisation tels que l'obturation de canalisations, ou la diminution de leurs propriétés mécaniques statiques et/ou dynamiques.

### Brève description des figures

D'autres particularités et caractéristiques de l'invention ressortiront de la description détaillée d'au moins un mode de réalisation avantageux présenté ci-dessous, à titre d'illustration, en se référant aux dessins annexés. Ceux-ci montrent :
[Fig. 1] des diagrammes représentatifs (points 1 à 6) du principe de fonctionnement du présent procédé ;
[Fig. 2] des images au microscope confocal permettant la comparaison de l'état de surface d'une pièce en alliage de titane TA6V après immersion dans un bain de polissage chimique selon un premier mode de réalisation de la présente invention pendant 0 min (a), 1 min (b), 2 min (c), 10 min (d), 20 min (e) et 30 min (f) ;
[Fig.3] un graphe représentant l'évolution de la rugosité Sa (rugosité - temps d'immersion) pour un échantillon immergé dans un bain de polissage chimique selon un premier mode de réalisation de la présente invention pendant différentes durées ;
[Fig.4] un graphe représentant l'évolution de la rugosité Sz (rugosité - temps d'immersion) pour un échantillon immergé dans un bain de polissage chimique selon un premier mode de réalisation de la présente invention pendant différentes durées ;
[Fig.5] un graphe représentant l'évolution de la décote (décote - temps d'immersion) pour un échantillon immergé dans un bain de polissage chimique selon un premier mode de réalisation de la présente invention pendant différentes durées ; et
[Fig.6] un graphe représentant à la fois l'évolution des rugosités Sa, Sz et de la décote (Sa, Sz, décote - concentration en titane) pour différents échantillons immergés dans des bains de polissage chimique selon d'autres modes de réalisation de la présente invention.

### Description détaillée à l'aide d'exemples

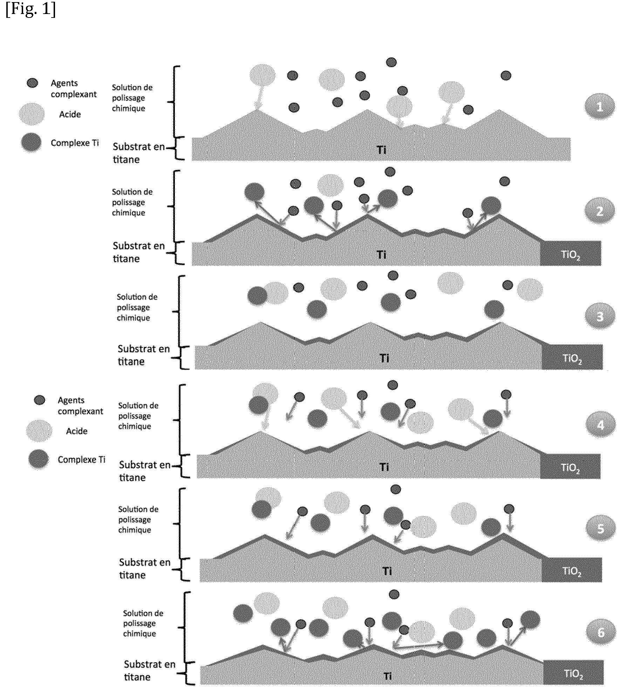

Le principe de fonctionnement du bain de polissage selon l'invention sera tout d'abord expliqué en référence à la figure 1. Comme expliqué précédemment, la présente invention propose, de manière surprenante, un bain de polissage permettant un abattement significatif de la rugosité, sans augmenter la décote, alors que ces deux effets nécessitent en général des paramètres antagonistes.

La viscosité accrue du bain, contrôlée par les acides sulfurique et phosphorique, permet de ralentir les phénomènes de diffusion des espèces chimiques de la solution vers la surface de la pièce. Cet appauvrissement de la surface en espèces actives, du fait de leur consommation au voisinage de la surface, est responsable d'un effet de polissage de la surface par dissolution sélective du relief de surface.

Le principe en est représenté à la Figure 1 :
1) : attaque et oxydation du matériau par les acides sulfurique et phosphorique et formation d'une première couche de passivation (oxydes métalliques à partir du titane et des éléments d'alliage le cas échéant) ;
2, 3) : complexation des oxydes de titane, et des oxydes d'alliage le cas échéant, par les agents complexants pour solubiliser les oxydes ;
4, 5) : diffusion lente des acides sulfurique et phosphorique (qui permettent entre autres l'oxydation de la surface) depuis la solution vers la surface de l'alliage à polir, la densité élevée du bain de polissage permettant de ralentir l'arrivée des composés oxydants (acides sulfurique et phosphorique) ;
6) : attaque des parties supérieures du relief, entrainant la réduction de la rugosité.

### Exemples :

On décrira ci-dessous 9 exemples de polissage de pièces de titane dans 9 bains différents, bains 1 à 9, conformes à l'invention, ainsi que 4 exemples de traitement de pièces en titane dans 4 bains différents, bains 10 à 13, non conformes à l'invention (exemples comparatifs).

13 pièces en alliage de titane TA6V référencées de A à M issues d'un même procédé de fabrication additive se présentent chacune sous la forme d'une plaque de dimensions 40x20 mm. La face dite supérieure est la face sur laquelle les couches de matériau sont ajoutées l'une après l'autre au cours du procédé de fabrication, tandis que la face inférieure est la face opposée. La face supérieure de chacune des pièces présente typiquement une rugosité Sa de l'ordre de 30 µm et une rugosité Sz de l'ordre de 300 µm.

Les pièces A et J à M ont d'abord subi une étape de dégraissage afin de préparer leur surface, selon un procédé classique bien connu de l'homme du métier. Les pièces B à I n'ont subi aucune étape de préparation de leur surface. Les 13 pièces A à M sont ensuite chacune partiellement recouverte à l'aide d'un ruban autocollant de masquage.

Les pièces en alliage de titane A à I partiellement masquées ainsi obtenues ont ensuite été soumises à des procédés de polissage chimique employant des bains de polissage de compositions différentes référencés 1 à 9, selon 9 modes de réalisation préférés mais non limitatifs de l'invention. Par ailleurs, les pièces en alliage de titane J à M partiellement masquées ainsi obtenues ont été soumises à des procédés de polissage chimique employant des bains de polissage comparatifs, de compositions différentes et non conformes à la présente invention, référencés 10 à 13. Les 13 bains différents 1 à 13 ont été réalisés dans des cuves similaires, avec des volumes de solution de 1 L ; leurs compositions sont détaillées dans le Tableau 1. Les bains correspondant aux contre-exemples sont identifiés dans le Tableau 1 à l'aide d'un astérisque *.

Tous les bains sont maintenus à une température de 40 °C.

La pièce en alliage de titane A a été immergée dans le bain 1 pendant une durée variable comprise entre 1 minute et 30 minutes. En particulier, des observations de la surface de la pièce A ont été réalisées après des durées d'immersion de 1 minute, 2 minutes, 10 minutes, 20 minutes et 30 minutes.

La pièce en alliage de titane B a été immergée dans le bain 2, la pièce C a été immergée dans le bain 3, la pièce D a été immergée dans le bain 4, la pièce E a été immergée dans le bain 5, la pièce F a été immergée dans le bain 6, la pièce G a été immergée dans le bain 7, la pièce H a été immergée dans le bain 8, la pièce I a été immergée dans le bain 9, la pièce J a été immergée dans le bain 10, la pièce K a été immergée dans le bain 11, la pièce L a été immergée dans le bain 12 et la pièce M a été immergée dans le bain 13.

Chacune des pièces B à M ont été immergées respectivement durant 50 min dans les bains 2 à 13.

Pour chacune des pièces, la zone recouverte par le ruban autocollant de masquage n'est pas en contact direct avec le bain dans lequel la pièce est immergée et ne subit aucune modification de son état de surface.

**[Tableau 1]**

| Bain | H₂SO₄ g/L (mol/L) | H₃PO₄ g/L (mol/L) | Titane g/L (mol/L) | NH₄F.HF g/L (mol/L) | Concentration équivalente en fluorure mol/L | Pièce | Durée d'immersion (min) | Sa (µm) | Décôte (µm) |
|---|---|---|---|---|---|---|---|---|---|
| Bain 1 | 100 (1,02) | 380 (3,9) | 2 (0,04) | 63 (1,11) | 2,22 | A | Variable | 4,57 ± 0,05 | 110 ± 20 |
| Bain 2 | 100 (1,02) | 380 (3,9) | 3 (0,06) | 63 (1,11) | 2,22 | B | 50 | 4,2 ± 0,4 | 120 ± 3 |
| Bain 3 | 100 (1,02) | 380 (3,9) | 5 (0,1) | 63 (1,11) | 2,22 | C | 50 | 4,7 ± 0,7 | 144 ± 20 |
| Bain 4 | 100 (1,02) | 380 (3,9) | 7 (0,14) | 63 (1,11) | 2,22 | D | 50 | 3,8 ± 0,9 | 100 ± 10 |
| Bain 5 | 100 (1,02) | 380 (3,9) | 10 (0,21) | 63 (1,11) | 2,22 | E | 50 | 3,5 ± 0,6 | 140 ± 30 |
| Bain 6 | 100 (1,02) | 380 (3,9) | 15 (0,31) | 63 (1,11) | 2,22 | F | 50 | 3,3 ± 0,5 | 130 ± 20 |
| Bain 7 | 100 (1,02) | 380 (3,9) | 20 (0,41) | 63 (1,11) | 2,22 | G | 50 | 3,2 ± 0,3 | 130 ± 10 |
| Bain 8 | 100 (1,02) | 380 (3,9) | 28 (0,58) | 63 (1,11) | 2,22 | H | 50 | 2,9 ± 0,1 | 120 ± 20 |
| Bain 9 | 100 (1,02) | 380 (3,9) | 34 (0,71) | 63 (1,11) | 2,22 | I | 50 | 2,95 ± 0,05 | 130 ± 2 |
| Bain 10 * | 98 (1) | 0 (0) | 5 (0,1) | 34 (0,6) | 1,2 | J | 50 | 6,6 ± 0,1 | 1200 ± 100 |
| Bain 11 * | 686 (7) | 0 (0) | 5 (0,1) | 34 (0,6) | 1,2 | K | 50 | 12,7 ± 0,5 | 600 ± 100 |
| Bain 12 * | 588 (6) | 0 (0) | 5 (0,1) | 68 (1,2) | 2,4 | L | 50 | 19,2 ± 0,5 | 400 ± 100 |
| Bain 13 * | 98 (1) | 882 (9) | 5 (0,1) | 68 (1,2) | 2,4 | M | 50 | 7,7 ± 0,4 | 280 ± 30 |

Dans le cadre de la présente invention, la viscosité élevée du bain de polissage (typiquement la densité est comprise entre 1,2 et 1,4 g/cm³) et les inhomogénéités locales de concentrations (dues à l'épaisseur de la couche de diffusion) en agent complexant étant deux paramètres permettant de maîtriser le polissage et favoriser l'attaque chimique des sommets, l'agitation du bain lorsque la pièce à traiter y est immergée est strictement contrôlée. L'agitation du bain peut par exemple se faire par recirculation de celui, à une vitesse telle que le bain est renouvelé deux à trois fois par heure.

Le bain est préférablement agité avec une vitesse d'agitation plus faible lorsque la pièce à polir est immergée (phase de traitement) que lors de la préparation du bain de polissage (phase d'homogénéisation). Cette vitesse d'agitation est typiquement comprise entre 5 et 10 L/min lors de la phase de traitement et aux alentours de 100 L/min lors des phases d'homogénéisation. Ces valeurs de vitesse d'agitation sont données à titre d'exemple uniquement et ne constituent pas une limitation de la présente invention. En particulier, la vitesse d'agitation influençant le renouvellement des espèces chimiques présentes dans la couche de liquide, appelée couche de diffusion, au voisinage de la pièce à traiter, une vitesse d'agitation plus faible permet la formation d'une couche de diffusion plus épaisse, ce qui ralentit la diffusion des réactifs et favorise le polissage.

Après immersion dans le bain de polissage, chacune des pièces traitées est rincée puis observée au microscope confocal afin de déterminer la diminution de sa rugosité et sa décote. En particulier, pour chacune des pièces, le ruban autocollant de masquage est retiré et une zone comprenant une surface traitée et une surface non traitée (car précédemment masquée par le ruban autocollant de masquage) est observée à l'aide d'un microscope confocal Olympus DSX510. La topographie de chacune des pièces (face supérieure et pour certaines pièces, face inférieure également) est enregistrée et analysée afin de déterminer la décote due à l'enlèvement de matière et les variations des paramètres de rugosité dus à l'effet polissant des différents bains, en particulier les variations de Sa et Sz.

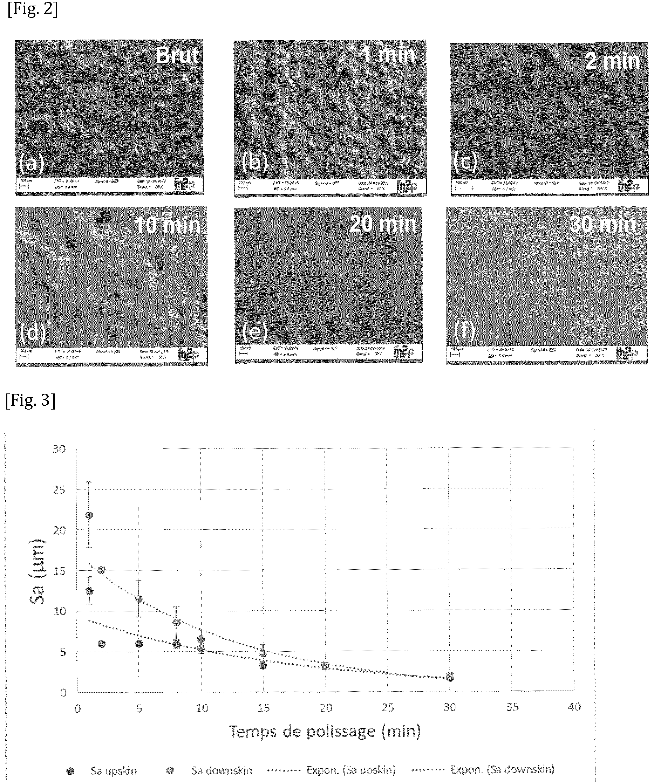

Les rugosités de surface obtenues à l'issu du polissage chimique (surface traitée) pour les pièces en alliage de titane A à I traitées à l'aide de bains selon l'invention, ainsi que la décote des pièces ayant eu lieu au cours de ce polissage sont reportées dans le Tableau 1 et aux Figures 2 à 6. Les rugosités de surface obtenues à l'issu du polissage chimique (surface traitée) pour les pièces en alliage de titane J à M traitées à l'aide de bains comparatifs qui ne sont pas selon l'invention, ainsi que la décote des pièces ayant eu lieu au cours de ce polissage sont reportées dans le Tableau 1.

L'ensemble des pièces A à M obtenues par un procédé de fabrication sensiblement identique présentent un état de surface similaire avant polissage, avec un Sa de l'ordre de 30 µm et un Sz de l'ordre de 200 µm.

Nous nous intéressons dans un premier temps uniquement à la pièce A, qui a été immergée pendant des durées variables dans le bain 1. La Fig. 2a est un cliché de la surface avant polissage. La Fig. 2b est un cliché de la pièce A après 1 min d'immersion dans le bain 1, la Fig. 2c correspond à la pièce A après 2 min d'immersion, la Fig. 2d à la pièce A après 10 min d'immersion, la Fig. 2e à la pièce A après 20 min d'immersion et la Fig. 2f à la pièce A après 30 min d'immersion. Les observations microscopiques de la Fig. 2 mettent en évidence l'efficacité des bains de polissage selon l'invention quant à l'élimination des particules partiellement fondues présentes en surface des échantillons. En effet, aucune particule sphérique n'est observée à leur surface après traitement (Fig. 2f, pièce A, 30 minutes d'immersion), et cela malgré leur taille initiale de l'ordre de la dizaine de microns dans le cas du procédé d'élaboration SLM (procédé de fabrication additive par fusion sélective par laser, ou *selective laser melting*) (Fig. 2a).

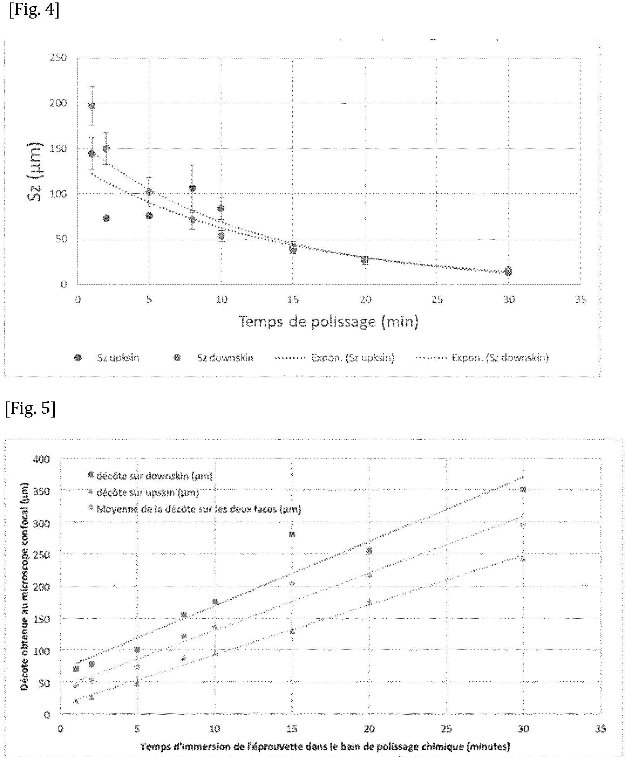

Après polissage, la pièce A a subi une décote de chacune de ses faces (Fig. 5), et ce dès une immersion d'une durée de 1 minute dans le bain 1. Les Fig. 3 et 4 indiquent une forte diminution du relief de surface de la pièce traitée par le bain 1 selon l'invention, et donc un polissage de la pièce A. Augmenter la durée d'immersion dans le bain de polissage permet d'améliorer l'abaissement de la rugosité de surface, aussi bien de la face supérieure que de la face inférieure (Fig. 3 et 4), cependant cela augmente également la décote de chacune de ces faces (Fig. 5). Par ailleurs, la rugosité moyenne de surface Sa après polissage chimique est comprise entre 2 et 3 µm au bout de 30 minutes de traitement et cela indépendamment de la rugosité initiale des échantillons. Il est à noter que la rugosité finale Sa semble tendre vers une limite autour d'environ 2-3 µm quelle que soit l'orientation de fabrication (i.e. que l'on considère la face supérieure ou la face inférieure), tandis que la décote continue d'augmenter. Il n'est pas nécessaire d'immerger trop longtemps les pièces à traiter dans le bain de polissage selon l'invention pour obtenir les effets de polissage désiré. Cependant, l'homme du métier appréciera que la vitesse d'attaque moyenne est de 10 µm/min, soit 300 µm de décote par face en 30 minutes d'immersion dans un bain selon l'invention, ce qui est deux fois plus faible que les décotes obtenues avec des procédés d'usinage chimique.

Le bain de polissage développé ici permet aussi de réduire significativement le paramètre de rugosité Sz (Fig. 4). L'évolution est similaire à celle du Sa avec des valeurs de moins de 20 µm après 30 minutes de traitement.

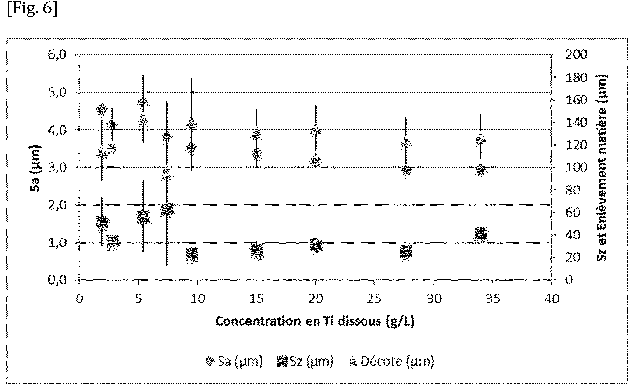

Si l'on s'intéresse maintenant aux pièces B à I, celles-ci ont été immergées pendant une durée sensiblement identique dans des bains différant les uns des autres de par la quantité initiale de titane qu'ils contenaient. Les observations réalisées ont porté uniquement sur la face supérieure et ont montré un abaissement significatif des rugosités de surface Sa et Sz (Fig. 6). En effet, les pièces présentaient avant traitement un Sa de l'ordre de 30 µm et présentent après traitement un Sa inférieur à 5 µm quel que soit le bain (2 à 9) utilisé, tandis que la rugosité Sz a été diminuée d'environ 200 µm à moins de 70 µm. La décote est limitée à des valeurs inférieures à 150 µm, ce qui correspond à un enlèvement de matière typique lors d'un procédé de polissage, par comparaison à un procédé d'usinage. Les résultats présentés à la Fig. 6 indiquent que l'efficacité d'un bain de polissage selon l'invention est optimale pour des concentrations en titane comprises entre 10 et 35 g/L.

En comparant les résultats obtenus à l'aide du bain 3 (selon l'invention) et du bain 13 (exemple comparatif), on remarque qu'augmenter la concentration en acide phosphorique entraîne une augmentation de la décote et un abaissement moindre de la rugosité de surface (Tableau 1). En comparant les résultats obtenus à l'aide du bain 3 (selon l'invention) et des bains 10 et 12 (exemples comparatifs), on remarque également qu'une diminution de la concentration en acide phosphorique simultanée à une augmentation de la concentration en acide sulfurique (bain 12) ou à une diminution de la concentration en agent complexant fluorure (bain 10) entraîne également une augmentation de la décote et un abaissement moindre de la rugosité de surface (Tableau 1). La décote de chacune des pièces J et L est plus de deux fois supérieure à celle de la pièce C traitée par le bain 3 (selon l'invention). Les bains 10 et 12 sont des bains d'usinage chimique et non pas des bains de polissage chimique.

## Revendications

1. Bain de polissage chimique pour le polissage d'une pièce en titane ou en alliage de titane, ou d'une partie de celle-ci, ledit bain de polissage chimique comprenant :
de l'eau,
un agent complexant fluorure apte à former un complexe avec le titane oxydé, à une concentration équivalente en fluorure comprise entre 1,40 et 2,80 mol/L ;
de l'acide phosphorique à une concentration entre 3,0 et 6,0 mol/L ; et
de l'acide sulfurique à une concentration entre 0,5 et 1,5 mol/L.

2. Bain de polissage chimique selon la revendication 1, dans lequel l'agent complexant fluorure est ajouté au bain sous forme de NH₄F, NH₄F.HF, NaF, NaF.HF, KF, KF.HF, H₂SiF₆, H₂TiF₆ ou leurs mélanges.

3. Bain de polissage chimique selon la revendication 1 ou 2, dans lequel l'agent complexant fluorure est présent de telle manière que la concentration en fluorure soit comprise entre 1,74 et 2,46 mol/L, de préférence entre 1,80 et 2,20 mol/L.

4. Bain de polissage chimique selon l'une quelconque des revendications précédentes, dans lequel l'acide phosphorique est présent à une concentration entre 4,0 et 5,5 mol/L, de manière préférée entre 4,5 et 5,0 mol/L.

5. Bain de polissage chimique selon l'une quelconque des revendications précédentes, dans lequel l'acide sulfurique est présent à une concentration entre 0,5 et 1,25 mol/L, de préférence à une concentration entre 0,80 et 1,02.

6. Bain de polissage chimique selon l'une quelconque des revendications précédentes, dans lequel le bain a un pH inférieur à 2,0, de manière préférée inférieur à 1,0, de manière particulièrement préférée le pH du bain de polissage chimique est négatif.

7. Bain de polissage chimique selon l'une quelconque des revendications précédentes, comprenant du titane, présent à une concentration allant d'environ 2 à 35 g/L soit comprise entre environ 0,04 et 0,73 mol/L, de préférence à une concentration allant d'environ 10 à 30 g/L soit comprise entre 0,20 et 0,63 mol/L.

8. Bain de polissage chimique selon l'une quelconque des revendications précédentes, ledit bain présentant une densité allant de 1,2 à 1,4 g/cm³.

9. Bain de polissage chimique selon l'une quelconque des revendications précédentes, ledit bain étant essentiellement exempt de particules abrasives.

10. Bain de polissage chimique selon l'une quelconque des revendications précédentes, dans lequel on n'ajoute pas d'huile, en particulier dans lequel on n'ajoute pas d'huile minérale ni d'huile végétale.

11. Procédé de polissage chimique pour le polissage d'une pièce en titane ou en alliage de titane, ou d'une partie de celle-ci, comprenant les étapes suivantes :
(i) fournir un bain de polissage chimique selon l'une quelconque des revendications précédentes ;
(ii) immerger une pièce à polir en titane ou en alliage de titane, ou une partie de celle-ci, dans le bain de polissage chimique, lequel est préférablement maintenu à une température comprise entre 30°C et 60°C, en particulier entre 40°C et 50°C ;
(iii) retrait de la pièce après une durée d'immersion prédéterminée.

12. Procédé de polissage chimique selon la revendication 11, dans lequel la durée d'immersion est comprise entre 20 et 60 minutes, de préférence comprise entre 30 et 50 minutes.

13. Procédé de polissage chimique selon la revendication 11 ou 12, dans lequel la pièce en titane ou en alliage de titane, ou la partie de celle-ci, à polir est soumise à une étape de dégraissage et/ou décapage chimique avant d'être immergée dans le bain de polissage chimique.

14. Bain de polissage chimique selon l'une des revendications 1 à 10, ou procédé de polissage chimique selon l'une des revendications 11 à 13, dans lequel la pièce à polir, ou la partie de celle-ci, est en titane de forme allotropique alpha, beta ou biphasé alpha-beta ou en alliage de titane de type alpha, alpha proche, beta, beta proche ou biphasé alpha-beta, en particulier les alliages de titane peuvent être les alliages TA6V, T40, TV10A3Fe2, Ti6242, β21, β21S, Ti 555-3, plus particulièrement l'alliage de titane est l'alliage TA6V ou l'alliage T40.

15. Bain de polissage chimique selon l'une des revendications 1 à 10, ou procédé de polissage chimique selon l'une des revendications 11 à 13, dans lequel la pièce en titane ou en alliage de titane à polir est obtenue par un procédé de fabrication additive.

## Patentansprüche

1. Chemisches Polierbad zum Polieren eines Titan- oder Titanlegierungswerkstücks oder eines Teils davon, wobei das chemische Polierbad umfasst:
Wasser,
einen Fluoridkomplexbildner, der dazu fähig ist, einen Komplex mit dem oxidierten Titan zu bilden, in einer äquivalenten Fluoridkonzentration zwischen 1,40 und 2,80 mol/L;
Phosphorsäure in einer Konzentration zwischen 3,0 und 6,0 mol/L und Schwefelsäure in einer Konzentration zwischen 0,5 und 1,5 mol/L.

2. Chemisches Polierbad nach Anspruch 1, wobei der Fluoridkomplexbildner dem Bad in der Form von NH₄F, NH₄F.HF, NaF, NaF.HF, KF, KF.HF, H₂SiF₆, H₂TiF₆ oder deren Gemischen zugegeben wird.

3. Chemisches Polierbad nach Anspruch 1 oder 2, wobei der Fluoridkomplexbildner derart vorliegt, dass die Fluoridkonzentration zwischen 1,74 und 2,46 mol/L, vorzugsweise zwischen 1,80 und 2,20 mol/L liegt.

4. Chemisches Polierbad nach einem der vorhergehenden Ansprüche, wobei die Phosphorsäure in einer Konzentration zwischen 4,0 und 5,5 mol/L, bevorzugt zwischen 4,5 und 5,0 mol/L vorliegt.

5. Chemisches Polierbad nach einem der vorhergehenden Ansprüche, wobei die Schwefelsäure in einer Konzentration zwischen 0,5 und 1,25 mol/L, vorzugsweise zwischen 0,80 und 1,02 vorliegt.

6. Chemisches Polierbad nach einem der vorhergehenden Ansprüche, wobei das Bad bei einem pH-Wert kleiner als 2,0, bevorzugt kleiner als 1,0 ist, besonders bevorzugt wobei der pH-Wert des chemischen Polierbads negativ ist.

7. Chemisches Polierbad nach einem der vorhergehenden Ansprüche, umfassend Titan, das in einer Konzentration vorliegt, die von ungefähr 2 bis 35 g/L reicht, nämlich zwischen ungefähr 0,04 und 0,73 mol/L liegt, vorzugsweise in einer Konzentration vorliegt, die von ungefähr 10 bis 30 g/L reicht, nämlich zwischen 0,20 und 0,63 mol/L liegt.

8. Chemisches Polierbad nach einem der vorhergehenden Ansprüche, wobei das Bad eine Dichte aufweist, die von 1,2 bis 1,4 g/cm³ reicht.

9. Chemisches Polierbad nach einem der vorhergehenden Ansprüche, wobei das Bad im Wesentlichen frei von Schleifpartikeln ist.

10. Chemisches Polierbad nach einem der vorhergehenden Ansprüche, wobei kein Öl zugegeben wird, wobei insbesondere weder Mineralöl noch Pflanzenöl zugegeben wird.

11. Chemisches Polierverfahren zum Polieren eines Titan- oder Titanlegierungswerkstücks oder eines Teils davon, umfassend die folgenden Schritte:
(i) Bereitstellen eines chemischen Polierbads nach einem der vorhergehenden Ansprüche;
(ii) Eintauchen eines zu polierenden Titan- oder Titanlegierungswerkstücks oder eines Teils davon in das chemische Polierbad, das vorzugsweise auf einer Temperatur gehalten wird, die zwischen 30 °C und 60 °C, insbesondere zwischen 40 °C und 50 °C liegt;
(iii) Herausnehmen des Werkstücks nach einer vorbestimmten Eintauchdauer.

12. Chemisches Polierverfahren nach Anspruch 11, wobei die Eintauchdauer zwischen 20 und 60 Minuten liegt, vorzugsweise zwischen 30 und 50 Minuten liegt.

13. Chemisches Polierverfahren nach Anspruch 11 oder 12, wobei das zu polierende Titan- oder Titanlegierungswerkstück oder der zu polierende Teil davon einem Schritt einer chemischen Entfettung und/oder Abbeizung unterzogen wird, bevor es in das chemische Polierbad eingetaucht wird.

14. Chemisches Polierbad nach einem der Ansprüche 1 bis 10 oder chemisches Polierverfahren nach einem der Ansprüche 11 bis 13, wobei das zu polierende Werkstück oder der zu polierende Teil davon aus Titan in der allotropen Alpha-, Beta- oder zweiphasigen Alpha-Beta-Form oder aus einer Titanlegierung des Alpha-, Nahe-Alpha-, Beta-, Nahe-Beta- oder zweiphasigen Alpha-Beta-Typs ist, insbesondere wobei die Titanlegierungen die Legierungen TA6V, T40, TV10A3Fe2, Ti6242, β21, β21S, Ti 555-3 sein können, ganz besonders wobei die Titanlegierung die Legierung TA6V oder die Legierung T40 ist.

15. Chemisches Polierbad nach einem der Ansprüche 1 bis 10 oder chemisches Polierverfahren nach einem der Ansprüche 11 bis 13, wobei das zu polierende Titan- oder Titanlegierungswerkstück durch ein additives Fertigungsverfahren erhalten wird.

## Claims

1. A chemical polishing bath for polishing a titanium or titanium alloy component, or a part thereof, said chemical polishing bath comprising:
water,
a fluoride complexing agent capable of forming a complex with oxidized titanium at an equivalent fluoride concentration of between 1.40 and 2.80 mol/L;
phosphoric acid in a concentration of between 3.0 and 6.0 mol/L; and
sulfuric acid in a concentration of between 0.5 and 1.5 mol/L.

2. The chemical polishing bath as claimed in claim 1, wherein the fluoride complexing agent is added to the bath in the form of NH₄F, NH₄F.HF, NaF, NaF.HF, KF, KF.HF, H₂SiF₆, H₂TiF₆ or mixtures thereof.

3. The chemical polishing bath as claimed in claim 1 or 2, wherein the fluoride complexing agent is present such that the concentration of fluoride is between 1.74 and 2.46 mol/L, preferably between 1.80 and 2.20 mol/L.

4. The chemical polishing bath as claimed in any one of preceding claims, wherein the phosphoric acid is present in a concentration of between 4.0 and 5.5 mol/L, preferably between 4.5 and 5.0 mol/L.

5. The chemical polishing bath as claimed in any one of preceding claims, wherein the sulfuric acid is present in a concentration of between 0.5 and 1.25 mol/L, preferably in a concentration of between 0.80 and 1.02.

6. The chemical polishing bath as claimed in any one of the preceding claims, wherein the bath has a pH of less than 2.0, preferably less than 1.0, particularly preferably the pH of the chemical polishing bath is negative.

7. The chemical polishing bath as claimed in any one of the preceding claims comprising titanium, present at a concentration ranging from approximately 2 to 35 g/L, namely between approximately 0.04 and 0.73 mol/L, preferably at a concentration ranging from approximately 10 to 30 g/L, namely between 0.20 and 0.63 mol/L.

8. The chemical polishing bath as claimed in any one of the preceding claims, said bath having a density ranging from 1.2 to 1.4 g/cm³.

9. The chemical polishing bath as claimed in any one of the preceding claims, said bath being essentially devoid of abrasive particles.

10. The chemical polishing bath as claimed in any one of the preceding claims, wherein no oil is added, in particular wherein neither mineral nor vegetable oil is added.

11. A chemical polishing method for polishing a titanium or titanium alloy component, or a part thereof, comprising the following steps:
(i) providing a chemical polishing bath as claimed in any one of the preceding claims;
(ii) immersing a titanium or titanium alloy component to be polished, or a part thereof in the chemical polishing bath which is preferably maintained at a temperature of between 30°C and 60°C, in particular between 40°C and 50°C;
(iii) removing the component after a predetermined immersion time.

12. The chemical polishing method as claimed in claim 11, wherein the duration of immersion is between 20 and 60 minutes, preferably between 30 and 50 minutes.

13. The chemical polishing method as claimed in claim 11 or 12, wherein the titanium or titanium alloy component, or the part thereof, to be polished is subjected to a degreasing and/or chemical pickling step before being immersed in the chemical polishing bath.

14. The chemical polishing bath as claimed in any one of claims 1 to 10, or the chemical polishing method as claimed in any one of claims 11 to 13, wherein the component to be polished, or the part thereof, is made of titanium of allotropic alpha, beta or two-phase alpha-beta form or of titanium alloy of alpha, near-alpha, beta, near-beta or two-phase alpha-beta form, in particular the titanium alloys may be the alloys TA6V, T40, TV10A3Fe2, Ti6242, β21, β21S, Ti 555-3, more particularly the titanium alloy is TA6V alloy or T40 alloy.

15. The chemical polishing bath as claimed in any one of claims 1 to 10, or the chemical polishing method as claimed in any one of claims 11 to 13, wherein the titanium or titanium alloy component to be polished is obtained by an additive manufacturing method.
